# EUROPÄISCHE PATENTSCHRIFT

(11) **EP 3 615 462 B1**
(45) Veröffentlichungstag und Bekanntmachung des Hinweises auf die Patenterteilung: **02.04.2025**
(21) Anmeldenummer: 18703765.0
(22) Anmeldetag: 06.02.2018
(51) Int. Cl.: B65G 47/82, B65G 47/88

(54) **BEHANDLUNGSVORRICHTUNG SOWIE BEHÄLTERBEHANDLUNGSMASCHINE**
TREATMENT DEVICE AND CONTAINER TREATMENT MACHINE
DISPOSITIF DE MANUTENTION, AINSI QUE MACHINE POUR LA MANUTENTION DE RÉCIPIENTS

(30) Priorität: 26.04.2017 DE 102017108903
(43) Veröffentlichungstag der Anmeldung: 04.03.2020
(73) Patentinhaber: KHS GmbH, 44143 Dortmund (DE)
(72) Erfinder: ECKES, Sebastian, 55576 Sprendlingen (DE); KRÄHENBIEL, Kai, 37127 Dransfeld (DE)
(86) Internationale Anmeldenummer: PCT/EP2018/052848
(87) Internationale Veröffentlichungsnummer: WO 2018/197063

(56) Entgegenhaltungen:
- EP-A1- 2 792 626
- EP-A1- 2 792 626
- DE-A1- 3 535 615
- DE-A1- 3 535 615
- JP-A- H08 133 470
- JP-A- H08 133 470
- US-A- 2 924 484
- US-A- 2 924 484

## Beschreibung

Die vorliegende Erfindung bezieht sich auf eine Behandlungsvorrichtung zur Behandlung von Behältern, wie insbesondere Dosen, Fässer, oder KEG-Behälter, entlang einer Behandlungsstrecke. Besonders bevorzugt sind dabei umfasst Behälter, die als KEG-Behälter mit Ventilverschlüssen, sogenannten Fittings, ausgebildet sind. Weiterhin betrifft die vorliegende Erfindung eine Behälterbehandlungsmaschine mit einer solchen Behandlungsvorrichtung.

Insbesondere kann die Behälterbehandlungsmaschine zur Innenreinigung und/oder zum Füllen der Behälter mit flüssigem Füllgut, gegebenenfalls auch zum Sterilisieren der Behälter, insbesondere der KEG-Behälter mit Fittings, ausgebildet sein. Bei derartigen KEG-Behältern handelt es sich übernd um Mehrweg-KEG-Behälter, insbesondere Mehrweg-KEG-Fässer. Bekanntermaßen stammt der Begriff aus dem Englischen und steht für "kleines Fass". Weiterhin ist aber auch eine Eignung für Einweg-KEG-Behälter gegeben.

Derartige Behälterbehandlungsmaschinen können dabei wenigstens eine Transportvorrichtung zum Befördern der Behälter entlang einer Behandlungsstrecke in zumindest einer Transportrichtung sowie wenigstens eine entlang der Behandlungsstrecke angeordnete und sich quer zur Transportrichtung erstreckende Behandlungsvorrichtung aufweisen. Die Behandlungsvorrichtung kann zumindest zwei einander gegenüberliegende, jeweils seitlich von der Transportvorrichtung befindliche Behandlungspositionen umfassen, in bzw. an denen die Behälter behandelbar sind. Ferner kann im Bereich der Behandlungsvorrichtung zumindest eine motorisch antreibbare Überschubeinrichtung zum Überschieben der Behälter von der Transportvorrichtung an zumindest eine der beiden gegenüberliegenden Behandlungspositionen und zurück auf die wenigstens eine Transportvorrichtung vorgesehen sein. Die Überschubeinrichtung bildet also eine Art Handlingseinheit aus, um die Behälter an den Behandlungsvorrichtungen zu positionieren.

Aus dem Stand der Technik bekannte Überschubeinrichtungen weisen dabei feste Verschiebeabstände zur Behälterpositionierung in die Behandlungsposition auf. Dies erfordert für die Positionierung von Behältern mit unterschiedlichen geometrischen Abmessungen, insbesondere unterschiedlichen Außendurchmessern, einen umständlichen und zeitaufwändigen Wechsel von Formatteilen und Anschlägen an den Überschubeinrichtungen, um letztlich an der jeweiligen Behandlungsvorrichtung Behälter mit einer im Vergleich dem vorherig überschobenen Behälter anderen geometrischen Abmessungen behandeln zu können.

JP H 08 133470 A offenbart eine Behandlungsvorrichtung zur Behandlung von KEG-Behälter, die zumindest zwei neben einer Transportvorrichtung befindliche Behandlungspositionen aufweist, in denen die Behälter behandelbar sind, sowie zumindest eine im Bereich der Behandlungsvorrichtung vorgesehene, antreibbare Überschubeinrichtung zum Überschieben der Behälter von der Transportvorrichtung an zumindest eine der Behandlungspositionen, wobei die Überschubeinrichtung zum Überschieben der Behälter zwei Verschiebearme aufweist, die quer zur Transportrichtung verschiebbar ausgebildet sind.

Aufgabe der Erfindung ist es, eine verbesserte Behandlungsvorrichtung sowie Behälterbehandlungsmaschine zum Behandeln von Behältern aufzuzeigen, die die Nachteile des Standes der Technik beseitig und die insbesondere ohne die Verwendung von Formatteilen an der Überschubeinrichtung Behälter unterschiedlichster geometrischer Abmessungen beispielsweise in die Behandlungsposition überschiebt. Zur Lösung dieser Aufgabe ist eine Behälterbehandlungsvorrichtung zur Behandeln von Behältern entsprechend dem Patentanspruch 1 ausgebildet. Eine entsprechende Behälterbehandlungsmaschine bildet den Gegenstand des nebengeordneten Patentanspruches 13. Die Unteransprüche betreffen besonders vorteilhafte Ausführungsvarianter der Erfindung.

Gemäß einem wesentlichen Aspekt bezieht sich die Erfindung auf eine Behandlungsvorrichtung zur Behandlung von Behältern, wie insbesondere Dosen, Fässer, oder KEG-Behälter, die zumindest zwei einander gegenüberliegende, jeweils seitlich neben einer Transportvorrichtung befindliche Behandlungspositionen aufweist, in denen die Behälter behandelbar sind, sowie zumindest eine im Bereich der Behandlungsvorrichtung vorgesehene, motorisch antreibbare Überschubeinrichtung zum Überschieben der Behälter von der Transportvorrichtung an zumindest eine der beiden gegenüberliegenden Behandlungspositionen und zurück auf die wenigstens eine Transportvorrichtung,
wobei die zumindest eine Überschubeinrichtung zum Überschieben der Behälter wenigstens drei Verschiebearme aufweist, die quer zur Transportrichtung und derart unabhängig zueinander motorisch verschiebbar ausgebildet sind, dass zum Überschieben des jeweiligen Behälters jeweils zwei der drei Verschiebearme an zumindest zwei einander im Wesentlichen gegenüberliegenden Anlagestellen an der Außenmantelfläche des entsprechenden Behälters anliegen und synchron zueinander verschiebbar sind.

Besonders vorteilhaft wird damit eine Behandlungsvorrichtung bereitgestellt, die über die unabhängig zueinander, jedoch letztlich synchron verschiebbaren wenigstens zwei Verschiebearme Behälter unterschiedlichster geometrischer Abmessungen auf eine Behandlungsposition überschieben und wieder auf die Transportvorrichtung zurückschieben kann, da somit auch die relative Positionierung der wenigstens zwei Verschiebarme zueinander an die Behältergeometrie, insbesondere den Behälteraußendurchmesser, anpassbar ist. Insbesondere kann damit auf Formatteile in der Überschubeinrichtung zum Überschieben der Behälter unterschiedlicher geometrischer Abmessungen verzichtet werden. Indem die Überschubeinrichtung erfindungsgemäß drei quer zur Transportrichtung motorisch gesteuerte Verschiebarme vorsieht, kann auch nach dem Positionieren eines ersten Behälters auf beispielsweise einer ersten Behandlungsposition, einer der drei Verschiebearme in einer Verweilposition in Bereich der ersten Behandlungsposition verbleiben, also verweilen, während immer noch zwei weitere Verschiebearme zum synchronen Überschieben eines weiteren zweiten Behälters an die der ersten Behandlungsvorrichtung gegenüberliegende zweite Behandlungsposition zur Verfügung steht. Der zweite Behälter kann dabei eine im Vergleich zum ersten Behälter unterschiedliche Behältergeometrie aufweisen. In anderen Worten wird also durch das erfindungsgemäße Vorsehen von wenigstens drei Verschiebarmen eine erhöhte Flexibilität bezüglich des synchronen Überschiebens von Behältern in jeder der beiden Behandlungspositionen und auch wieder zurück auf die Transportvorrichtung erreicht, da zu jedem Zeitpunkt der Bestückung der wenigstens einen Behandlungsvorrichtung zumindest zwei Verschiebarme zum Überschieben der Behälter zur freien Verfügung stehen. Weiterhin kann damit die wenigstens eine Transportvorrichtung sowohl als Zuförderer, als auch als Abförderer für die Behälter dienen.

Gemäß einer vorteilhaften Ausführungsvariante kann vorgesehen sein, dass die wenigstens drei Verschiebarme unabhängig zueinander motorisch gesteuert und/oder geregelt verschiebbar ausgebildet sind.

Gemäß einer weiteren vorteilhaften Ausführungsvariante kann vorgesehen sein, dass die Verschiebung der wenigstens drei Verschiebearme unter Einbeziehung zumindest einer einstufigen Lasterkennung, insbesondere Drehmomenterkennung, der die Verschiebarme antreibenden Motoren gesteuert und/oder geregelt ist.

Gemäß einer nochmals weiteren vorteilhaften Ausführungsvariante kann vorgesehen sein, dass die wenigstens drei Verschiebearme an den zumindest zwei einander im Wesentlichen gegenüberliegenden Anlagestellen zum zentrierbaren Überschieben des entsprechenden Behälter jeweils zumindest zwei Zentrierelemente aufweisen, die jeweils kontaktschlüssig während des Überschiebens des entsprechenden Behälters an dessen entsprechender Außenmantelfläche anlegbar sind. Insbesondere können die Zentrierelemente als Rollenelemente ausgebildet sein, die in ihrer jeweiligen Längsstreckung lotrecht zur Transportebene E sowie im Wesentlichen parallel zueinander orientiert sind. Diese können zylinderförmig sein oder auch eine andere geeigente Querschnittskontur aufweisen, bzw. eine dreieckige Querschnittskontur. Insbesondere können die Zentrierelemente um ihre jeweilige Längsachse drehbar an dem jeweiligen Verschiebearm angeordnet sein. Insbesondere sind die jeweils zwei, ein Zentrierelementpaar, ausbildenden Zentrierelemente in Transportrichtung beabstandet zueinander vorgesehen.

Gemäß einer nochmals weiteren vorteilhaften Ausführungsvariante kann vorgesehen sein, dass an zumindest einem Zentrierelement eines Verschiebarms eine Sensoreinrichtung vorgesehen ist, die als Druck- und/oder Positionssensoreinrichtung ausgebildet ist.

Gemäß einer nochmals weiteren vorteilhaften Ausführungsvariante können auch mehrere Behandlungsvorrichtungen entlang der Behandlungsstrecke vorgesehen sein, wobei die jeweilige Behandlungsvorrichtung zumindest zwei einander gegenüberliegende, jeweils seitlich von der Transportvorrichtung befindliche Behandlungspositionen aufweist.

Gemäß einer nochmals weiteren vorteilhaften Ausführungsvariante kann vorgesehen sein, dass zumindest eine Behandlungsvorrichtung zumindest an einer der beiden Behandlungspositionen eine Inspektionseinrichtung zur optischen Überwachung des jeweils auf der entsprechenden Behandlungsposition aufgeschobenen Behälters aufweist.

Gemäß einer nochmals weiteren vorteilhaften Ausführungsvariante kann vorgesehen sein, dass zumindest eine Behandlungsvorrichtung zumindest an einer der beiden Behandlungspositionen eine optische Sensoreinrichtung zur Ermittlung der geometrischer Abmessungen, insbesondere der Behältergeometrie, beispielweise dem Behälteraußendurchmesser und/oder der Behälterhöhe, des jeweils auf der entsprechenden Behandlungsposition aufgeschobenen Behälters aufweist.

Gemäß einer nochmals weiteren vorteilhaften Ausführungsvariante kann vorgesehen sein, dass zumindest eine Behandlungsvorrichtung zumindest an einer der beiden Behandlungspositionen einen Schleusenplatz aufweist.

Gemäß einer nochmals weiteren vorteilhaften Ausführungsvariante kann vorgesehen sein, dass die wenigstens drei Verschiebearme an einer gemeinsamen schienenförmigen Führungseinrichtung unabhängig zueinander verschiebbar angeordnet sind.

Gemäß einer nochmals weiteren vorteilhaften Ausführungsvariante kann vorgesehen sein, dass die wenigstens drei Verschiebearme jeweils über einen Halteabschnitt an einem entsprechend zugehörigen, mittels der Führungseinrichtung geführten und quer zur Transportrichtung motorisch verschiebbar antreibbaren Schlitten angeordnet sind.

Schließlich kann gemäß einer nochmals weiteren vorteilhaften Ausführungsvariante kann vorgesehen sein, dass die wenigstens eine Transportvorrichtung als Teil oder Bestandteil der Behandlungsvorrichtung ausgebildet ist. Insbesondere kann die Transportvorrichtung fest mit der Behandlungsvorrichtung verbunden, beispielsweise in bzw. an dieser integriert sein.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:

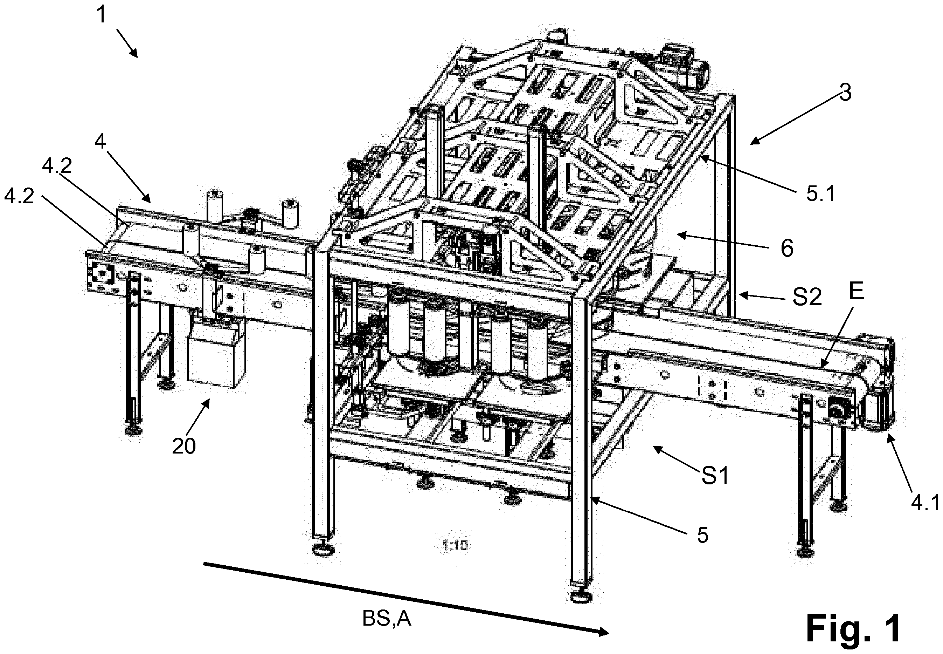

- Fig. 1: in schematischer Perspektivdarstellung eine beispielhafte Ausführungsvariante einer erfindungsgemäßen Behälterbehandlungsmaschine mit Überschubeinrichtung,

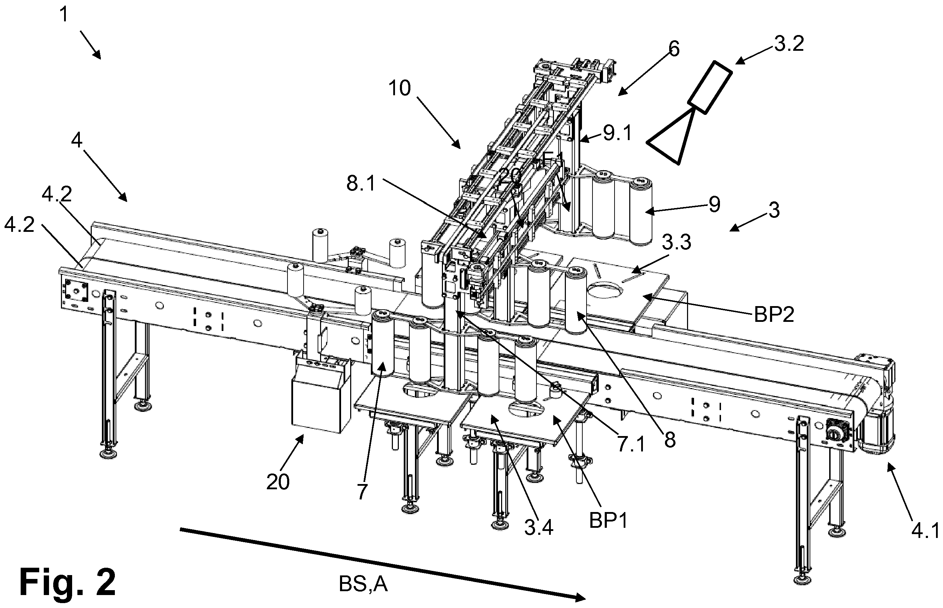

- Fig. 2: in schematischer Perspektivdarstellung die beispielhafte Behälterbehandlungsmaschine gemäß Figur 1 mit teilweise dargestellter Überschubeinrichtung,
- Fig. 3: eine schematische Draufsicht auf die beispielhafte Behälterbehandlungsmaschine mit teilweise dargestellter Überschubeinrichtung,
- Fig. 4: eine weitere schematische Draufsicht auf die beispielhafte Behälterbehandlungsmaschine mit teilweise dargestellter Überschubeinrichtung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

In den Figuren ist mit 1 allgemein eine Behälterbehandlungsmaschine zum Behandeln von Behältern 2 bezeichnet. Die Behälterbehandlungsmaschine 1 kann dabei zur Innenreinigung und/oder zum Füllen der Behälter 2 mit flüssigem Füllgut und/oder zum Sterilisieren der Behälter 2 ausgebildet sein. Insbesondere kann die Innenreinigung und/oder das Füllen der Behälter 2 und/oder das Sterilisieren der Behälter 2 an bzw. im Bereich wenigstens einer Behandlungsvorrichtung 3 erfolgen, nämlich an einer Behandlungsposition BP1, BP2. Dabei kann die Behälterbehandlungsmaschine 1 auch mehrere Behandlungsvorrichtungen 3 vorsehen, die für jeweils gleiche und/oder unterschiedliche Behandlungsschritte, nämlich für die Innenreinigung und/oder das Füllen und/oder das Sterilisieren der Behälter 2, ausgebildet sind. Die in den Figuren dargestellte Behälterbehandlungsmaschine 1 weist dabei nur exemplarisch und beispielhaft eine einzige Behandlungsvorrichtung 3 auf. Jedoch entspricht es dem Wesen der Erfindung, auch mehrere Behandlungsvorrichtungen 3, beispielsweise 2, 3, 4, 5 oder mehr Behandlungsvorrichtungen 3 entlang einer Behandlungsstrecke BS vorzusehen, ohne dabei den Erfindungsgedanken zu verlassen.

Beispielsweise kann es sich bei den Behältern 2 um KEG-Behälter, insbesondere KEG-Behälter mit Fittings, handeln. Die KEG-Behälter können dabei als Einweg- oder Mehrweg-KEG-Behälter ausgebildet sein, wobei es sich überwiegend um Mehrweg-KEG-Behälter handelt. Dabei können die KEG-Behälter als KEG-Fässer ausgebildet sein. Die Behälter 2 können auch als Dosen, insbesondere Großdosen, ausgebildet sein. Dabei weisen die Behälter 2 bevorzugt ein Fassungsvolumen an flüssigem Füllgut 5I bis 50I auf.

Ferner weist die Behälterbehandlungsmaschine 1 für eine Zuführung der Behälter 2 auf die Behandlungsstrecke BS sowie eine Abführung der Behälter 2 von der Behandlungsstrecke BS wenigstens eine Transportvorrichtung 4 auf, mittels der die Behälter 2 in zumindest einer Transportrichtung A entlang der Behandlungsstrecke BS beförderbar sind. Die Behandlungsstrecke BS erstreckt sich damit zumindest entlang der Längserstreckung der wenigstens einen Transportvorrichtung 4. Beispielweise kann die wenigstens eine Transportvorrichtung 4 als Teil oder Bestandteil der Behandlungsvorrichtung 3 ausgebildet sein. Insbesondere kann die Transportvorrichtung 4 fest mit der Behandlungsvorrichtung 3 verbunden, beispielsweise in bzw. an dieser integriert sein.

Beispielsweise kann die Transportvorrichtung 4 als motorisch angetriebene Endlosfördervorrichtung, insbesondere endlose Bandfördervorrichtung, ausgebildet sein und beispielsweise zwei im Wesentlichen parallel zueinander über einen gemeinsamen Motorantrieb 4.1 antreibbare Endlosförderbänder 4.2 aufweisen, die eine gemeinsame Transportebene E für die Behälter 2 ausbilden.

Der wenigstens einen Transportvorrichtung 4 können dabei zur Zuführung der Behälter 2 auf die Behandlungsstrecke BS in Transportrichtung A gesehen vorgeschaltet weitere, in den Figuren nicht dargestellte, Transportvorrichtungen vorgeordnet bzw. in Transportrichtung A der Behandlungsstrecke BS nachgeschaltet weitere Transportvorrichtungen zum Abführen der Behälter 2 nachgeordnet vorgesehen sein. Die vor- bzw. nachgeordneten Transportvorrichten sind dabei zum Zuführen auf bzw. zum Abführen von der Behandlungsstrecke BS vorgesehen.

Ferner weist die Behälterbehandlungsmaschine 1 wenigstens eine entlang der Behandlungsstrecke BS angeordnete und sich quer zur Transportrichtung A erstreckende Behandlungsvorrichtung 3 auf, die zumindest zwei einander gegenüberliegende, jeweils seitlich von der Transportvorrichtung 4 befindliche Behandlungspositionen BP1, BP2 aufweist, an denen die Behälter 2 behandelbar sind. Insbesondere befindet sich damit die eine Behandlungsposition BP1 auf einer ersten Seite entlang der Längserstreckung der Transportvorrichtung 4 und die andere Behandlungsposition BP2 auf einer der ersten Seite gegenüberliegenden zweiten Seite entlang der Längserstreckung der Transportvorrichtung 4, und zwar der Behandlungsposition BP1 gegenüberliegend.

Die Behälterbehandlungsmaschine 1 kann zudem der wenigstens einen Behandlungsvorrichtung 3 in Transportrichtung A vorgeordnet entlang der Behandlungsstrecke BS einen Vereinzeler 20 vorsehen sein, um einzelne über die Transportvorrichtung 4 angeförderte Behälter 2 zumindest kurzzeitig zu stoppen und wieder zum Weiterfördern freizugeben.

Erfindungsgemäß sind entlang der Behandlungsstrecke BS mehrere sich jeweils quer zur Transportrichtung A erstreckende Behandlungsvorrichtungen 3 vorgesehen, die jeweils zumindest zwei einander gegenüberliegende, jeweils seitlich von der Transportvorrichtung 4 befindliche Behandlungspositionen BP1, BP2 aufweisen, in oder an denen die Behälter 2 behandelbar sind.

Mehr im Detail weist die jeweilige Behandlungsvorrichtung 3 an einer ersten Seite S1 neben der Transportvorrichtung 4 wenigstens eine erste Behandlungsposition BP1 und an einer der ersten Seite S1 gegenüberliegenden zweiten Seite S2 wenigstens eine zweite Behandlungsposition BP2 neben der Transportvorrichtung 4 auf. In anderen Worten kann also die erste Behandlungsposition BP1 an der ersten Seite S1 neben der Transportvorrichtung 4 vorgesehen sein und die wenigstens eine zweite Behandlungsposition BP2 an der zweiten Seite S2 neben der Transportvorrichtung 4 und zwar quer zur Transportrichtung A und einander gegenüberliegend.

Vorzugsweise können an der jeweiligen Behandlungsvorrichtung 3 zwei erste Behandlungspositionen BP1 und zwei zweite Behandlungspositionen BP2 ausgebildet sein, die jeweils einander gegenüberliegend und jeweils seitlich neben der Transportvorrichtung 4 ausgebildet und an denen die Behälter 2 behandelbar sind.

Die jeweilige Behandlungsvorrichtung 3 ist an ihren zumindest zwei Behandlungspositionen BP1, BP2 zur Innenreinigung und/oder Füllen der Behälter 2 und/oder Sterilisieren der Behälter 2 ausgebildet. Hierfür weist die jeweilige Behandlungsvorrichtung 3 wenigstens einen Maschinenrahmen 5 auf, in dem auch die Behandlungspositionen BP1, BP2 aufgenommen angeordnet sind. Der Maschinenrahmen 5 bildet damit ein Maschinengestell zur Aufnahme und Anordnung wenigstens der Bauteile und Baugruppen der Behandlungsvorrichtung 3 aus.

Insbesondere erstreckt sich der Maschinenrahmen 5 mit einem das Oberteil bildenden Traversenelement 5.1 quer über die Transportvorrichtung 4 und zwar insbesondere oberhalb der Transportebene E, derart, dass die Behälter 2 darunter hindurch beförderbar sind. Insbesondere kann das Traversenelement 5.1 einen rechteckförmigen Rahmenabschnitt des Maschinenrahmens 5 ausbilden, der sich mit seinen Längsseiten quer, insbesondere rechtwinklig oder im Wesentlichen rechtwinklig, zur Transportrichtung A über die Transportvorrichtung 3 erstreckt und dabei die beiden Längsseiten der Transportvorrichtung 3 beidseitig überragt.

Insbesondere weist die jeweilige Behandlungsvorrichtung 3 an einer jeden Behandlungsposition BP1, BP2 zumindest einen dem Fachmann bekannten und nicht nähergehend dargestellten, vorzugsweise ortsfesten Behandlungskopf auf, wobei der jeweilige Behälter 2 in der Behandlungsposition BP1, BP2 vorzugsweise zentrisch unterhalb des jeweiligen Behandlungskopfes zu positionieren ist. Beispielsweise wirken die Behandlungsköpfe der Behandlungsvorrichtung 3 in der jeweiligen Behandlungsposition BP1, BP2 mit dem Fitting eines KEG-Behälters zusammen. Beispielsweise kann der jeweilige Behandlungskopf eine Ventileinrichtung umfassen, die mit dem Fitting eines entsprechenden Behälters 2 verbindbar ist, um eine Innenreinigung des Behälters 2 mit Säure und/oder Lauge und/oder Dampf und/oder Wasser und/oder ein Füllen des Behälters 2 mit flüssigen Füllgut zu ermöglichen.

Alternativ oder zusätzlich kann der jeweiligen Behandlungsvorrichtung 3 zumindest an einer der beiden Behandlungspositionen BP1, BP2 auch eine nur schematisch angedeutete Inspektionseinrichtung 3.2, beispielweise in Form einer Kamera, zur optischen Überwachung des jeweils auf der entsprechenden Behandlungsposition BP1, BP2 aufgeschobenen Behälters 2 zugeordnet sein. Diese Inspektionseinrichtung 3.2 kann auch dazu dienen, den Keg-Typ oder dessen Höhe zu erfassen und diese Daten an eine zentrale Steuereinheit zu übermitteln. Wiederum alternativ oder zusätzlich kann der jeweiligen Behandlungsvorrichtung 3 zumindest an einer der beiden Behandlungspositionen BP1, BP2 eine ebenfalls nur schematisch angedeutete Sensoreinrichtung 3.3, optische Sensoreinrichtung, zur Ermittlung der geometrischer Abmessungen, insbesondere der Behältergeometrie, beispielweise dem Behälteraußendurchmesser und/oder der Behälterhöhe, des jeweils auf der entsprechenden Behandlungsposition BP1, BP2 aufgeschobenen Behälters 2 zugeordnet sein.

Nochmals Alternativ oder zusätzlich kann der jeweiligen Behandlungsvorrichtung 3 zumindest an einer der beiden Behandlungspositionen BP1, BP2 auch eine nur schematisch angedeutete Schleusenplatz 3.4 zugeordnet sein, an dem keine Behandlung des jeweils auf der entsprechenden Behandlungsposition BP1, BP2 aufgeschobenen Behälters 2 erfolgt. Der Schleusenplatz 3.4 bildet eine Art Warte- oder Verweilposition für einen entsprechenden Behälter 2 an dieser Behandlungsposition BP1, BP2 aus.

Weiterhin weist die erfindungsgemäße Behandlungsmaschine 1 zumindest eine im Bereich der jeweiligen Behandlungsvorrichtung 3 vorgesehene, motorisch antreibbare Überschubeinrichtung 6 zum Überschieben der Behälter 2 von der Transportvorrichtung 4 an zumindest eine der beiden gegenüberliegenden Behandlungspositionen BP1, BP2 und zurück auf die wenigstens eine Transportvorrichtung 4 auf.

Sind mehrere Behandlungsvorrichtungen 3 entlang der Behandlungsstrecke BS vorgesehen, so kann einer jeden der Behandlungsvorrichtungen 3 wenigstens eine solcherartige Überschubeinrichtung 6 zugeordnet sein.

Mehr im Detail kann die zumindest eine Überschubeinrichtung 6 zum Überschieben der Behälter 2 wenigstens drei Verschiebearme 7, 8, 9 aufweisen, die jeweils quer zur Transportrichtung A und derart unabhängig zueinander motorisch verschiebbar ausgebildet sind, dass zum Überschieben des jeweiligen Behälters 2 jeweils zwei der drei Verschiebearme 7, 8, 9 an zumindest zwei einander im Wesentlichen gegenüberliegenden Anlagestellen A1, A2 an der Außenmantelfläche des entsprechenden Behälters 2 anliegen und synchron zueinander verschiebbar sind.

Insbesondere sind dabei die wenigstens drei Verschiebearme 7, 8, 9 unabhängig und im Wesentlichen parallel zueinander motorisch gesteuert und/oder geregelt verschiebbar ausgebildet.

Dabei kann die wenigstens eine Überschubeinrichtung 6 zumindest eine schienenförmige Führungseinrichtung 10 aufweisen, die an dem Maschinenrahmen 5, insbesondere an dessen Traversenelement 5.1 angeordnet, beispielsweise in diesem integriert aufgenommen ist. Die wenigstens drei Verschiebearme 7, 8, 9 können über einen jeweiligen arm- oder stangenförmigen Halteabschnitt 7.1, 8.1, 9.1 mit der zumindest einen schienenförmigen Führungseinrichtung 10 verbunden sein und zwar derart, dass die wenigstens drei Verschiebearme 7, 8, 9 über ihren zugehörigen Halteabschnitt 7.1, 8.1, 9.1 quer zur Transportrichtung A jeweils unabhängig zueinander verschiebbar ausgebildet sind.

Beispielsweise können die arm- oder stangenförmigen Halteabschnitt 7.1, 8.1, 9.1 an jeweils einem separaten, mittels der schienenförmigen Führungseinrichtung 10 quer zur Transportrichtung A verschiebbaren Schlitten 10.1, 10.2, 10.3 angeordnet und über den jeweiligen Schlitten 10.1, 10.2, 10.3 entsprechend geführt sein. Der jeweilige Schlitten 10.1, 10.2, 10.3 ist dabei motorisch gesteuert und/oder geregelt antreibbar und damit letztlich in beiden Richtungen quer zur Transportrichtung A verschiebbar. Der Halteabschnitt 7.1 wirkt mit dem Schlitten 10.1, der Halteabschnitt 8.1 mit dem Schlitten 10.2 und Halteabschnitt 9.1 mit dem Schlitten 10.3 zusammen.

Hierfür kann der jeweilige Schlitten 10.1, 10.2, 10.3 beispielsweise über einen jeweils separaten Riemenantrieb, insbesondere einen jeweils separaten Zahnriemenantrieb, entlang der wenigstens einen schienenförmigen Führungseinrichtung 10 motorisch gesteuert und/oder geregelt verschiebbar antreibbar sein. Insbesondere kann der jeweilige Schlitten 10.1, 10.2, 10.3 über jeweils einen separaten Motorantrieb M1, M2, M3, vorzugsweise einen Servomotor und/oder einen elektromagnetischen Direktantrieb, motorisch gesteuert und/oder geregelt antreibbar sein. Die mechanische Kopplung des jeweiligen Schlittens 10.1, 10.2, 10.3 mit dem entsprechenden Motor M1, M2, M3 kann beispielsweise über eine Gewindespindel erfolgen. Hierbei sind dem Fachmann jedoch auch alternative Anbindungsmöglichkeiten bekannt. Der Motorantrieb M1 wirkt dabei mit dem Schlitten 10.1, der Motorantrieb M2 mit dem Schlitten 10.2 und Motorantrieb M2 mit dem Schlitten 10.3 zusammen.

Zudem können die wenigstens drei Verschiebearme 7, 8, 9 an den zumindest zwei einander im Wesentlichen gegenüberliegenden Anlagestellen A1, A2 zum synchronen Überschieben des entsprechenden Behälter 2 jeweils zumindest zwei Zentrierelemente 7a und 7b, 8a und 8b, 9a und 9b aufweisen, die jeweils kontaktschlüssig zum zentrierbaren Überschieben an der Außenmantelfläche des entsprechenden Behälters 2 anliegen. Insbesondere können die Zentrierelemente 7a und 7b, 8a und 8b, 9a und 9b als zylinderförmige Rollenelemente ausgebildet sein, die in ihrer jeweiligen Längsstreckung lotrecht zur Transportebene E sowie im Wesentlichen parallel zueinander orientiert sind. Insbesondere können die Zentrierelemente 7a und 7b, 8a und 8b, 9a und 9b um ihre jeweilige Längsachse drehbar an dem jeweiligen Verschiebearm 7, 8, 9 angeordnet sein. Insbesondere sind die jeweils zwei, ein Zentrierelementpaar, ausbildenden Zentrierelemente 7a und 7b, 8a und 8b, 9a und 9b in Transportrichtung A beabstandet zueinander vorgesehen.

Fernen können im Bereich der Zentrierelemente 7a und 7b, 8a und 8b, 9a und 9b nur schematisch angedeutete Sensoreinrichtungen SE1, SE2, SE3 vorgesehen sein, die beispielsweise als Drucksensoren und/oder Positionssensoren ausgebildet sein können. Den Zentrierelementen 7a und 7b des Verschiebearms 7 ist dabei die Sensoreinrichtung SE1, den Zentrierelementen 8a und 8b des Verschiebearms 8 die Sensoreinrichtung SE2 sowie den Zentrierelementen 9a und 9b des Verschiebearms 9 die Sensoreinrichtung SE3 zugeordnet.

Die Behälterbehandlungsmaschine 1 kann dabei über eine nicht nähergehend dargestellte Steuereinrichtung gesteuert und/oder geregelt werden. Die Steuereinrichtung kann dabei Teil oder Bestandteil der Behälterbehandlungsmaschine 1 sein. Insbesondere ist die Steuereinrichtung zur Steuerung und/oder Regelung sämtlicher elektrischer und/oder elektronischer Bauteile und Komponenten der Behälterbehandlungsmaschine 1, wie beispielsweise der Füllventile, der Inspektionseinrichtung 3.2, der Sensoreinrichtung 3.3, des Motorantriebs 4.1, des Motorantrieb M1 und/oder M2 und/oder M3 sowie der Sensoreinrichtungen SE1 und/oder SE2 und/oder SE3 ausgebildet, wobei auch sämtliche vorgenannten Bauteile und Komponenten in funktionaler Wechselwirkung zueinander mittels der Steuereinrichtung ansteuerbar sind.

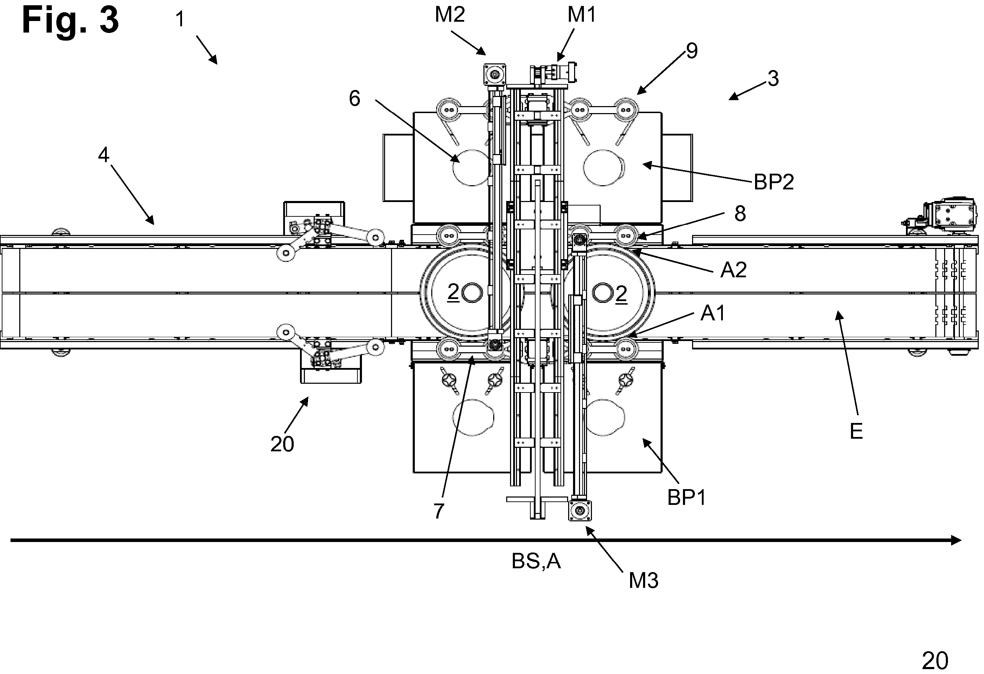

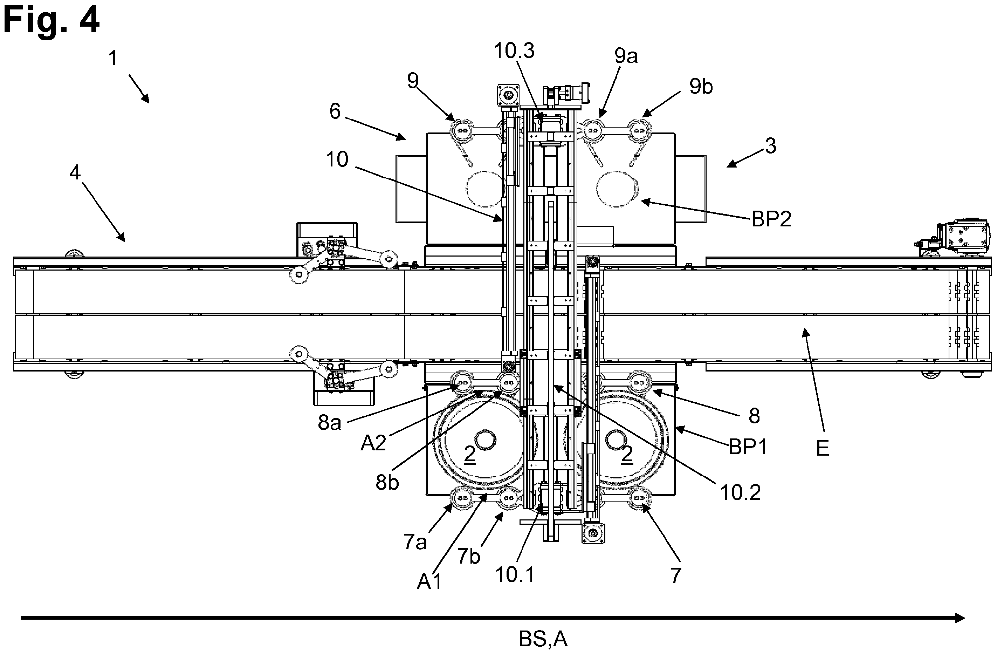

Die Figuren 3 und 4 zeigen die Behälterbehandlungsmaschine 1 jeweils in einer schematischen Draufsicht mit nur teilweise dargestellter Überschubeinrichtung 6, wobei aus Übersichtlichkeitsgründen insbesondere der Maschinenrahmen 5 weggelassen wurde. Mehr im Detail zeigt die Figur 3 dabei die Behälterbehandlungsmaschine 1 in einer Behandlungsposition, bei der sich die Behälter 2 noch auf der Transportvorrichtung 4, insbesondere mit ihrer Behälterhochachse auf der durch die Transportbänder 4.2 gebildeten Transportebene E lotrecht aufstehend, befinden.

Die in den Figuren dargestellte Ausführungsvariante zeigen sämtlich eine Behandlungsvorrichtung 3 mit zwei ersten und zwei zweiten Behandlungspositionen BP1, BP2 sowie einer Überschubeinrichtung 6 mit wenigstens drei Verschiebarmen 7, 8, 9, die alle jeweils zwei Zentrierelementpaare, also jeweils in Summe vier Zentrierelemente7a und 7b, 8a und 8b, 9a und 9b zum synchronen Überschub von jeweils gleichzeitig zwei Behältern 2 aufweisen.

Die Anförderung der Behälter 2 in Transportrichtung A entlang der Behandlungsstrecke BS erfolgt mittels der Transportvorrichtung 4, die über die Steuereinrichtung motorisch gesteuert und/oder geregelt die Behälter 2 stoppt, wenn diesen sich in dem Eingriffsbereich der Überschubeinrichtung 6 befinden.

Nachfolgend werden wenigstens zwei der drei Verschiebearme, in der Figur 3 exemplarisch der Verschiebearm 7 sowie der Verschiebearm 8, an den zumindest zwei im Wesentlichen gegenüberliegenden Anlagenstellen A1, A2 der Außenmantelfläche der Behälter 2 zur Anlage gebracht, also in Richtung der Außenmantelfläche der Behälter 2 unter Einbeziehung der Steuereinrichtung motorisch gesteuert und/oder geregelt mittels deren Motorantrieb M1 und M2 verschoben.

Die Figur 3 zeigt dabei die Position der Verschiebearme 7 und 8, in der diese bereits in Anlage mit der Außenmantelfläche der Behälter 2 stehen. Während des Verschiebens der Verschiebearme 7, 8 jeweils in Richtung der Außenmantelfläche der Behälter 2, erfolgt mittels der Steuereinrichtung eine zumindest einstufige, vorzugsweise mehrstufige Lasterkennung, insbesondere Drehmomenterkennung, der die Verschiebearme antreibenden Motoren M1, M2. Ein Lastanstieg, insbesondere ein Drehmomentanstieg, wird erfasst, erkannt und definiert das Anliegen der jeweiligen Zentrierelemente 7a und 7b, 8a und 8b an den Anlagestellen A1, A2 der Außenmantelfläche der Behälter 2. Vorzugsweise wird erfolgt eine mehrstufige Lasterkennung, nämlich zumindest eine erste Lasterkennung bei Anliegen des Verschiebearmes 7 sowie wenigstens eine zweite Lasterkennung bei Anliegen des Verschiebearmes 8 jeweils an der Außenmantelfläche der Behälter 2.

Es kann vorgesehen sein, dass ab diesem Verschiebezeitpunkt der Verschiebearme 7, 8 zum Überschieben der Behälter 2 auf die entsprechende Behandlungsposition BP1, BP2 eine im Vergleich langsamere Verschiebung der Verschiebearme 7, 8 erfolgt.

Alternativ oder zusätzlich kann vorgesehen sein, dass über die Sensoreinrichtung 3.3 die Behältergeometrie, beispielweise der Behälteraußendurchmesser und/oder die Behälterhöhe und damit letztlich das jeweilige Behältervolumen ermittelt werden.

Nochmals Alternativ oder zusätzlich kann vorgesehen sein, dass das Anliegen der Zentrierelemente 7a und 7b, 8a und 8b, 9a und 9b an der Außenmantelfläche der Behälter 2 über die Sensoreinrichtungen SE1, SE2, SE3 erkannt wird, indem diese als Drucksensoren ausgebildet sind und bei Anlage an der Außenmantelfläche der Behälter 2 ein Signal an die Steuereinrichtung senden.

Wiederum alternativ oder zusätzlich kann eine relative Lage- bzw. Positionserkennung der Verschiebearme 7, 8, 9 erfolgen, indem die den Zentrierelementen 7a und 7b, 8a und 8b, 9a und 9b zugeordneten Sensoreinrichtungen SE1, SE2, SE3 als Positionssensoren ausgebildet sind und der Steuereinrichtung während des Verschiebens der Verschiebearme 7, 8, 9 ihre jeweilige relative Positionslage zueinander übermitteln. Zudem kann über die Lageerkennung der Verschiebearme 7, 8, 9 die Behältergeometrie, insbesondere der Behälteraußendurchmesser, bestimmt werden.

Während des synchronen Überschiebens der Behälter 2 auf die erste Behandlungsposition BP1 bildet der Verschiebearm 8 den den Behälter 2 "aktiv" überschiebenden Verschiebearm, während der Verschiebearm 7 zwar an der Außenmantelfläche Behälter 2 anliegt und synchron mit überschoben wird, jedoch für den Behälter 2 einen Art Anschlag ausbildet, derart, dass der Behälter 2 beidseitig geführt durch die Verschiebearme 7, 8 auf die erste Behandlungsposition BP1 überschoben wird (Fig. 4).

Der weiterhin vorgesehene dritte Verschiebearm 9 kann sich während der beschriebenen Verschiebung in einer Art Wartposition im Bereich der zweiten Behandlungsposition BP2 befinden. Werden nun weitere Behälter 2 angefördert, so steht dieser dritte Verschiebearm 9 im Zusammenwirken mit dem dann "freien" Verschiebearm 8 zu einem erneuten Überschieben der weiteren angeförderten Behälter 2 zur Verfügung.

Besonders vorteilhaft weist die Behälterbehandlungsmaschine 1 entlang der Behandlungsstrecke BS mehrere gemäß obigen Beschreibung ausgebildete Behandlungsvorrichtungen 3 auf. Damit kann eine formatteillose Behälterbehandlungsmaschine 1 breitgestellt werden, die insbesondere die folgenden Vorteile aufweist:
- Einfangen und Positionieren der Behälter 2 losgelöst von deren jeweiligen Behälterdurchmesser
- Zentrieren unterschiedlicher Behälterdurchmesser auf ortsstabilen Behandlungsköpfen der Behandlungspositionen BP1, BP2.
- Intelligente, formatunabhängige Bestückung der Behandlungspositionen BP1, BP2 zum Zeitpunkt freier Behandlungsköpfe aus einer Vielzahl Behandlungsköpfen, wobei die freien Köpfe von verschiedenen Prozessen mit unterschiedlichen Prozesszeiten bedient werden.
- Reversierendes Positioniersystem, das freie Behandlungsvorrichtungen BP1, BP2 frei gibt.
- Anpassung der Behandlungsprozesse an die geometrischen Abmessungen der Behälter 2 (Volumen)

Die Behälterzuweisung kann damit flexibel an den mehreren Behandlungsvorrichtungen 3 erfolgen. Weiterhin sind unterschiedliche Verfahrzyklen der Behälter 2, beispielsweise Geschwindigkeitsprofile, möglich. Die Behälterbehandlungsmaschine 1 kann damit formatteillos unterschiedliche Behälter 2 positionieren, wobei die Zu- und Abführung der Behälter 2 besonders vorteilhaft über eine einzige Transportvorrichtung 4 erfolgen kann. Insgesamt wird damit eine Behälterbehandlungsmaschine 1 geschaffen, die nur einen minimalen Eingriff durch das Bedienpersonal erfordert.

Die Bearbeitungszyklen in den Bearbeitungsstationen BP1, BP2 der einzelnen Behandlungsvorrichtungen 3 sind damit voneinander unabhängig, sodass beispielsweise die zeitliche und chemische Intensität einer als Reinigungsstation ausgebildeten Behandlungsposition BP1, BP2 variierbaren kann. Anhand des bekannten Behälterformates (Durchmesser und Höhe) kann der Zyklus optimal abgestimmt werden. Dadurch wird eine Reduzierung der Reinigungsmedien erreicht.

Vorteilhaft werden dabei die Behälter 2 während der Positionierung mittels der Verschiebearme 7, 8, 9 dauerhaft geführt. Dadurch werden kürzere Verfahrzyklen erreicht, was die Prozesszeit sinken lässt. Weiterhin ist kein mechanischer Eingriff nötig, um einen Formatwechsel durchzuführen.

Es entsteht eine Kosteneinsparung aufgrund des nicht notwendigen Eingriffs des Bedienpersonals. Durch die Behältererkennung können die Zyklen optimal angepasst werden, um die Medienverbräuche zu minimieren und die Zykluszeit automatisiert anzupassen.

Die Behälterbehandlungsmaschine 1 ist modular um einzelne Behandlungsvorrichtungen 3 erweiterbar, um die Anlagenleistung zu erhöhen. Dabei ist ein Einsatz von Reinigungs-, Füll, Vor-, Haupt- und Kombireiniger umsetzbar. Die Integrierung von Peripherielösungen wie Dekantieren, Fittingbearbeitung und Kappenauf- und abziehen ist außerdem gegeben.

Die Erfindung ist nicht auf das dargestellte Ausführungsbeispiel beschränkt, sondern kann innerhalb des Schutzbereichs der nachfolgenden Ansprüche beliebige variiert werden.

### Bezugszeichenliste

- 1: Behälterbehandlungsmaschine
- 2: Behälter
- 3: Behandlungsvorrichtung
- 3.2: Inspektionseinrichtung
- 3.3: Sensoreinrichtung
- 3.4: Schleusenplatz
- 4: Transportvorrichtung
- 4.1: Motorantrieb
- 4.2: Endlosförderbänder
- 5: Maschinenrahmen
- 5.1: Traversenelement
- 6: Überschubeinrichtung
- 7: Verschiebearm
- 7a, 7b: Zentrierelement
- 7.1: Halteabschnitt
- 8: Verschiebearm
- 8a, 8b: Zentrierelement
- 8.1: Halteabschnitt
- 9: Verschiebarm
- 9a, 9b: Zentrierelement
- 9.1: Halteabschnitt
- 10: Führungseinrichtung
- 10.1...10.3: Schlitten

- 20: Vereinzeler

- A: Transportrichtung
- A1, A2: Anlagestellen
- BS: Behandlungsstrecke
- BP1: Behandlungsposition
- BP2: Behandlungsposition
- E: Transportebene
- M1...M3: Motorantrieb
- S1, S2: Seite
- SE1...SE3: Sensoreinrichtung

## Patentansprüche

1. Behandlungsvorrichtung (3) zur Behandlung von Behältern (2), wie insbesondere Dosen, Fässer, oder KEG-Behälter, die zumindest zwei einander gegenüberliegende, jeweils seitlich neben einer Transportvorrichtung (4) befindliche Behandlungspositionen (BP1, BP2) aufweist, in denen die Behälter (2) behandelbar sind, sowie zumindest eine im Bereich der Behandlungsvorrichtung (3) vorgesehene, motorisch antreibbare Überschubeinrichtung (6) zum Überschieben der Behälter (2) von der Transportvorrichtung (4) an zumindest eine der beiden gegenüberliegenden Behandlungspositionen (BP1, BP2) und zurück auf die wenigstens eine Transportvorrichtung (4), wobei die Behandlungsvorrichtung (3) an ihren zumindest zwei Behandlungspositionen (BP1, BP2) zur Innenreinigung und/oder zum Füllen der Behälter (2) und/oder zum Sterilisieren der Behälter (2) ausgebildet ist und einen Maschinenrahmen (5) aufweist, in dem die Behandlungspositionen (BP1, BP2) aufgenommen angeordnet sind, und wobei die zumindest eine Überschubeinrichtung (6) zum Überschieben der Behälter (2) wenigstens drei Verschiebearme (7, 8, 9) aufweist, die quer zur Transportrichtung (A) und derart unabhängig zueinander motorisch verschiebbar ausgebildet sind, dass zum Überschieben des jeweiligen Behälters (2) jeweils zwei der drei Verschiebearme (7, 8, 9) an zumindest zwei einander im Wesentlichen gegenüberliegenden Anlagestellen (A1, A2) an der Außenmantelfläche des entsprechenden Behälters (2) anliegen und synchron zueinander verschiebbar sind.

2. Behandlungsvorrichtung nach Anspruch 1, **dadurch gekennzeichnet, dass** die wenigstens drei Verschiebarme (7, 8, 9) unabhängig zueinander motorisch gesteuert und/oder geregelt verschiebbar ausgebildet sind.

3. Behandlungsvorrichtung nach Anspruch 1 oder 2, **dadurch gekennzeichnet, dass** die Verschiebung der wenigstens drei Verschiebearme (7, 8, 9) unter Einbeziehung zumindest einer einstufigen Lasterkennung, insbesondere Drehmomenterkennung, der die Verschiebarme (7, 8, 9) antreibenden Motoren (M1, M2, M3) gesteuert und/oder geregelt ist.

4. Behandlungsvorrichtung nach einem der vorhergehenden Ansprüche, **dadurch gekennzeichnet, dass** die wenigstens drei Verschiebearme (7, 8, 9) an den zumindest zwei einander im Wesentlichen gegenüberliegenden Anlagestellen (A1, A2) zum zentrierbaren Überschieben des entsprechenden Behälter (2) jeweils zumindest zwei Zentrierelemente (7a und 7b, 8a und 8b, 9a und 9b) aufweisen, die jeweils kontaktschlüssig während des Überschiebens des entsprechenden Behälters (2) an dessen entsprechender Außenmantelfläche anlegbar sind.

5. Behandlungsvorrichtung nach Anspruch 4, **dadurch gekennzeichnet, dass** an zumindest einem Zentrierelement (7a und 7b, 8a und 8b, 9a und 9b) eines Verschiebarms (7, 8, 9) eine Sensoreinrichtung (SE1, SE2, SE3) vorgesehen ist, die als Druck- und/oder Positionssensoreinrichtung ausgebildet ist.

6. Behandlungsvorrichtung nach einem der vorhergehenden Ansprüche, **dadurch gekennzeichnet, dass** die Behandlungsvorrichtung (3) zumindest an einer der beiden Behandlungspositionen (BP1, BP2) eine Inspektionseinrichtung (3.2) zur optischen Überwachung des jeweils auf der entsprechenden Behandlungsposition (BP1, BP2) aufgeschobenen Behälters (2) aufweist.

7. Behandlungsvorrichtung nach einem der vorhergehenden Ansprüche, **dadurch gekennzeichnet, dass** die Behandlungsvorrichtung (3) zumindest an einer der beiden Behandlungspositionen (BP1, BP2) eine optische Sensoreinrichtung (3.3) zur Ermittlung der geometrischen Abmessungen, insbesondere der Behältergeometrie, beispielweise dem Behälteraußendurchmesser und/oder der Behälterhöhe, des jeweils auf der entsprechenden Behandlungsposition (BP1, BP2) aufgeschobenen Behälters (2) aufweist.

8. Behandlungsvorrichtung nach einem der vorhergehenden Ansprüche, **dadurch gekennzeichnet, dass** die Behandlungsvorrichtung (3) zumindest an einer der beiden Behandlungspositionen (BP1, BP2) einen Schleusenplatz (3.4) ausbildet.

9. Behandlungsvorrichtung nach einem der vorhergehenden Ansprüche, **dadurch gekennzeichnet, dass** die wenigstens drei Verschiebearme (7, 8, 9) an einer gemeinsamen schienenförmigen Führungseinrichtung (10) unabhängig zueinander verschiebbar angeordnet sind.

10. Behandlungsvorrichtung nach Anspruch 9, **dadurch gekennzeichnet, dass** die wenigstens drei Verschiebearme (7, 8, 9) jeweils über einen Halteabschnitt (7.1, 8.1, 9.1) an einem entsprechend zugehörigen, mittels der Führungseinrichtung (10) geführten und quer zur Transportrichtung (A) motorisch verschiebbar antreibbaren Schlitten (10.1, 10.2, 10.3) angeordnet sind.

11. Behandlungsvorrichtung nach einem der vorhergehenden Ansprüche, **dadurch gekennzeichnet, dass** die wenigstens eine Transportvorrichtung (4) als Teil oder Bestandteil der Behandlungsvorrichtung (3) ausgebildet ist.

12. Behälterbehandlungsmaschine zum Behandeln von Behältern (2), wie insbesondere Dosen, Fässer, oder KEG-Behälter, entlang einer Behandlungsstrecke (BS), umfassend wenigstens eine Transportvorrichtung (4) zum Befördern der Behälter (2) entlang der Behandlungsstrecke (BS) in zumindest einer Transportrichtung (A), ferner umfassend wenigstens eine entlang der Behandlungsstrecke (BS) angeordnete Behandlungsvorrichtung (3), **dadurch gekennzeichnet, dass** die wenigstens eine Behandlungsvorrichtung (3) nach einem der vorherigen Ansprüche ausgebildet ist und sich die wenigstens eine Behandlungsvorrichtung (3) quer zur Transportrichtung (A) erstreckt.

13. Behälterbehandlungsmaschine nach Anspruch 12, **gekennzeichnet durch** mehrere Behandlungsvorrichtungen (3) entlang der Behandlungsstrecke (BS), wobei die jeweilige Behandlungsvorrichtung (3) zumindest zwei einander gegenüberliegende, jeweils seitlich von der Transportvorrichtung (4) befindliche Behandlungspositionen (BP1, BP2) aufweist.

## Claims

1. Treatment device (3) for treating containers (2), such as, in particular cans, barrels, or keg containers, comprising at least two mutually opposing treatment positions (BP1, BP2), each located laterally next to a transport device (4), in which the containers (2) can be treated, as well as at least one motor driven transfer device (6), provided in the region of the treatment device (3), for transferring the containers (2) from the transport device (4) to at least one of the two opposing treatment positions (BP1, BP2) and back onto the at least one transport device (4), wherein the treatment device (3) is configured at its at least two treatment positions (BP1, BP2) for the interior cleaning and/or for the filling of the containers (2), and/or for the sterilising of the containers (2), and comprises a machine frame (5), in which the treatment positions (BP1, BP2) are arranged, and wherein the at least one transfer device (6) comprises at least three displacement arms (7, 8, 9) for transferring the containers (2), which are arranged transversely to the transport direction (A) and are configured to be displaceable independently of one another by means of a motor in such a way that, for transferring the respective container (2), in each case two of the three displacement arms (7, 8, 9) can be moved to come in contact with at least two essentially mutually opposed bearing points (A1, A2) on the outer surface of the corresponding container (2), and can be displaced synchronously with one another.

2. Treatment device according to claim 1, **characterised in that** the at least three displacement arms (7, 8, 9) are configured to be displaceable independently of one another and are controlled and/or regulated by means of a motor.

3. Treatment device according to claim 1 or 2, **characterised in that** the displacement of the at least three displacement arms (7, 8, 9), involves at least one single-step load recognition process, in particular torque recognition, which controls and/or regulates the motors (M1, M2, M3) which drive the displacement arms (7, 8, 9).

4. Treatment device according to any one of the preceding claims, **characterised in that** the at least three displacement arms (7, 8, 9) comprise at the at least two essentially opposing bearing points (A1, A2), for the centring transfer of the corresponding containers (2), in each case at least two centring elements (7a and 7b, 8a and 8b, 9a and 9b), which in each case can be brought in contact during the transfer of the corresponding container (2) at its corresponding outer surface.

5. Treatment device according to claim 4, **characterised in that** a sensor device (SE1, SE2, SE3) is provided at least at one centring element (7a and 7b, 8a and 8b, 9a and 9b) of a displacement arm (7, 8, 9), which is configured as a pressure and/or position sensor device.

6. Treatment device according to any one of the preceding claims, **characterised in that** the treatment device (3) comprises at least at one of the two treatment positions (BP1, BP2) an inspection device (3.2) for the optical monitoring of the container (2) which is each case is being displaced at the corresponding treatment position (BP1, BP2).

7. Treatment device according to any one of the preceding claims, **characterised in that** the treatment device (3) comprises at least at one of the two treatment positions (BP1, BP2) an optical sensor device (3.3) for the detection of the geometric dimensions, in particular the container geometry, such as the container outer diameter and/or the container height, of the container (2) being displaced at the corresponding treatment position (BP1, BP2).

8. Treatment device according to any one of the preceding claims, **characterised in that** the treatment device (3) forms an air-lock location (3.4) at least at one of the two treatment positions (BP1, BP2).

9. Treatment device according to any one of the preceding claims, **characterised in that** the at least three displacement arms (7, 8, 9) are arranged at a common guide device (10) in the form of a rail, and can be displaced independently of one another.

10. Treatment device according to claim 9, **characterised in that** the at least three displacement arms (7, 8, 9) are in each case arranged above a holding section (7.1, 8.1, 9.1) at a corresponding assigned carriage (10.1, 10.2, 10.3), which is guided by means of the guide device (10) and can be driven by a motor such as to be displaced transversely to the transport direction (A).

11. Treatment device according to any one of the preceding claims, **characterised in that** the at least one transport device (4) is configured as a part or component of the treatment device (3).

12. Container treatment machine for treating containers (2), such as, in particular, cans, barrels, or keg containers, along a treatment path (BS), comprising at least one transport device (4) for conveying the containers (2) along the treatment path (BS) in at least one transport direction (A), and further comprising at least one treatment device (3) arranged along the treatment path (BS), **characterised in that** the at least one treatment device (3) is configured in accordance with any one of the preceding claims, and the at least one treatment device (3) extends transversely to the transport direction (A).

13. Container treatment machine according to claim 12, **characterised by** a plurality of treatment devices (3) along the treatment path (BS), wherein the respective treatment device (3) comprises at least two mutually opposed treatment positions (BP1, BP2) each located to the side of the transport device (4).

## Revendications

1. Dispositif de traitement (3) pour le traitement de récipients (2), tels qu'en particulier des boîtes, barils ou récipients de type fût, qui présente au moins deux positions de traitement (BP1, BP2) opposées l'une à l'autre, se trouvant respectivement latéralement à côté d'un dispositif de transport (4), dans lesquelles les récipients (2) peuvent être traités, ainsi qu'au moins un dispositif de transfert (6) pouvant être entraîné par moteur, prévu dans la zone du dispositif de traitement (3), pour transférer les récipients (2) à partir du dispositif de transport (4) à au moins l'une des deux positions de traitement (BP1, BP2) opposées l'une à l'autre et de nouveau sur l'au moins un dispositif de transport (4), dans lequel le dispositif de traitement (3) est réalisé sur ses au moins deux positions de traitement (BP1, BP2) pour le nettoyage intérieur et/ou pour le remplissage des récipients (2) et/ou pour la stérilisation des récipients (2) et présente un châssis de machine (5), dans lequel sont agencées en étant logées les positions de traitement (BP1, BP2), et dans lequel l'au moins un dispositif de transfert (6) présente pour le transfert des récipients (2) au moins trois bras déplaçables (7, 8, 9), qui sont réalisés de manière à pouvoir être déplacés de façon motorisée transversalement par rapport à la direction de transport (A) et indépendamment les uns des autres, de telle sorte que pour le transfert du récipient (2) respectif, respectivement deux des trois bras déplaçables (7, 8, 9) s'appliquent sur respectivement au moins deux points d'appui (A1, A2) sensiblement opposés l'un à l'autre sur la surface d'enveloppe extérieure du récipient (2) correspondant et peuvent être déplacés de manière synchrone les uns par rapport aux autres.

2. Dispositif de traitement selon la revendication 1, **caractérisé en ce que** les au moins trois bras déplaçables (7, 8, 9) sont réalisés de manière à pouvoir se déplacer de façon commandée et/ou régulée par moteur indépendamment les uns des autres.

3. Dispositif de traitement selon la revendication 1 ou 2, **caractérisé en ce que** le déplacement des au moins trois bras déplaçables (7, 8, 9) est commandé et/ou régulé en incluant au moins une détection de charge à une étape, notamment une détection de couple des moteurs (M1, M2, M3) entraînant les bras déplaçables (7, 8, 9).

4. Dispositif de traitement selon l'une quelconque des revendications précédentes, **caractérisé en ce que** les au moins trois bras déplaçables (7, 8, 9) présentent respectivement au moins deux éléments de centrage (7a et 7b, 8a et 8b, 9a et 9b) sur les au moins deux points d'appui (A1, A2) sensiblement opposés l'un à l'autre pour le transfert centrable du récipient (2) correspondant, qui pendant le transfert du récipient (2) correspondant peuvent être posés respectivement en contact sur la surface d'enveloppe extérieure correspondante de celui-ci.

5. Dispositif de traitement selon la revendication 4, **caractérisé en ce qu'**un système de capteur(s) (SE1, SE2, SE3), qui est réalisé comme un système de capteur de pression et/ou de position, est prévu sur au moins un élément de centrage (7a et 7b, 8a et 8b, 9a et 9b) d'un bras déplaçable (7, 8, 9).

6. Dispositif de traitement selon l'une quelconque des revendications précédentes, **caractérisé en ce que** le dispositif de traitement (3) présente au moins sur une des deux positions de traitement (BP1, BP2) un système d'inspection (3.2) pour la surveillance optique du récipient (2) respectivement poussé sur la position de traitement (BP1, BP2) correspondante.

7. Dispositif de traitement selon l'une quelconque des revendications précédentes, **caractérisé en ce que** le dispositif de traitement (3) présente au moins sur une des deux positions de traitement (BP1, BP2) un système de capteur(s) optique(s) (3.3) pour la détermination des dimensions géométriques, en particulier de la géométrie du récipient, par exemple le diamètre extérieur du récipient et/ou la hauteur du récipient, du récipient (2) respectivement poussé sur la position de traitement (BP1, BP2) correspondante.

8. Dispositif de traitement selon l'une quelconque des revendications précédentes, **caractérisé en ce que** le dispositif de traitement (3) réalise un emplacement d'écluse (3.4) au moins sur une des deux positions de traitement (BP1, BP2).

9. Dispositif de traitement selon l'une quelconque des revendications précédentes, **caractérisé en ce que** les au moins trois bras déplaçables (7, 8, 9) sont disposés de manière à pouvoir se déplacer les uns par rapport aux autres sur un système de guidage (10) en forme de rail commun.

10. Dispositif de traitement selon la revendication 9, **caractérisé en ce que** les au moins trois bras déplaçables (7, 8, 9) sont disposés respectivement par l'intermédiaire d'une section de retenue (7.1, 8.1, 9.1) sur un chariot (10.1, 10.2, 10.3) associé de manière correspondante, guidé au moyen du système de guidage (10) et pouvant être entraîné de manière déplaçable par moteur transversalement par rapport à la direction de transport (A).

11. Dispositif de traitement selon l'une quelconque des revendications précédentes, **caractérisé en ce que** l'au moins un dispositif de transport (4) est réalisé en tant que partie ou élément constitutif du dispositif de traitement (3).

12. Machine de traitement de récipients pour traiter des récipients (2), en particulier des boîtes, barils ou récipients de type fûts, le long d'une ligne de traitement (BS), comprenant au moins un dispositif de transport (4) pour convoyer les récipients (2) le long de la ligne de traitement (BS) dans au moins une direction de transport (A), comprenant en outre au moins un dispositif de traitement (3) disposé le long de la ligne de traitement (BS), **caractérisé en ce que** l'au moins un dispositif de traitement (3) est réalisé selon l'une quelconque des revendications précédentes et l'au moins un dispositif de traitement (3) s'étend transversalement par rapport à la direction de transport (A).

13. Machine de traitement de récipients selon la revendication 12, **caractérisée par** plusieurs dispositifs de traitement (3) le long de la ligne de traitement (BS), dans laquelle le dispositif de traitement (3) respectif présente au moins deux positions de traitement (BP1, BP2) opposées l'une à l'autre, se trouvant respectivement à côté du dispositif de transport (4).
